# FASCICULE DE BREVET EUROPEEN

(11) **EP 3 300 819 B1**
(45) Date de publication et mention de la délivrance du brevet: **18.12.2019**
(21) Numéro de dépôt: 17193620.6
(22) Date de dépôt: 28.09.2017
(51) Int. Cl.: B29C 64/214, B33Y 30/00, B22F 3/105

(54) **DISPOSITIF DE FABRICATION DE PIECES ANNULAIRES PAR FUSION SELECTIVE DE POUDRE COMPRENANT UN RACLEUR DE POUDRE**
VORRICHTUNG ZUR HERSTELLUNG VON RINGFÖRMIGEN TEILEN DURCH SELEKTIVES PULVERSCHMELZEN MIT EINEM PULVERABSTREIFER
DEVICE FOR MANUFACTURING ANNULAR PARTS BY SELECTIVELY MELTING POWDER COMPRISING A POWDER SCRAPER

(30) Priorité: 29.09.2016 FR 1659327
(43) Date de publication de la demande: 04.04.2018
(73) Titulaire: SAFRAN AIRCRAFT ENGINES, 75015 Paris (FR)
(72) Inventeur: BOUR, Jean-Luc, Denis, 77550 Moissy Cramayel (FR); CHANTOISEAU, Olivier, Pascal, Paul, 77550 Moissy Cramayel (FR)
(74) Mandataire: Milien, Jean-Baptiste Aurélien

(56) Documents cités:
- EP-A1- 1 270 185
- DE-A1-102013 210 242
- US-A1- 2004 265 413
- US-A1- 2013 264 750

## Description

### DOMAINE DE L'INVENTION

L'invention concerne le domaine de la fabrication de pièces par fusion sélective de poudre, et notamment un dispositif de fabrication de pièces annulaires par fusion sélective de poudre. Bien entendu, par « pièce annulaire », on entend une pièce cylindrique de section circulaire, tronconique, à symétrie de révolution, ou équivalent.

### ETAT DE LA TECHNIQUE ANTERIEURE

La fabrication de pièces par fusion sélective de poudre demande, avant de fritter la poudre de manière sélective, un dépôt d'une couche de poudre d'épaisseur uniforme (i.e. sans surépaisseur ou manque local). La qualité de la pièce dépend notamment de la qualité de l'uniformité de l'épaisseur de la couche de poudre que l'on souhaite fritter. Ce problème est particulièrement sensible pour les pièces à géométrie annulaire, notamment dans le cas où le distributeur de poudre est rotatif et finit sa trajectoire annulaire là où il l'avait commencée. Il existe ainsi une zone « de raccord » où l'homogénéité de l'épaisseur de la couche de poudre est particulièrement délicate à maitriser. Il existe donc un besoin en ce sens.

US2013/0264750 divulgue un procédé de frittage sélectif de poudre et un système adapté à un tel procédé. US2004/0265413 divulgue un appareil et procédé d'impression 3D.

### PRESENTATION DE L'INVENTION

Un mode de réalisation est défini par la revendication 1 et concerne un dispositif de fabrication de pièces annulaires par fusion sélective de poudre, comprenant une paroi annulaire interne et une paroi annulaire externe concentriques et délimitant une zone annulaire de dépôt de poudre, un distributeur de poudre mobile en rotation autour de l'axe des parois annulaires interne et externe, le distributeur de poudre comprenant un racleur s'étendant entre la paroi annulaire interne et la paroi annulaire externe en formant un angle avec la direction radiale des parois annulaires interne et externe.

Les deux parois annulaires sont concentriques, et présentent un axe commun, cet axe commun (ci-après « l'axe ») définissant une direction axiale. On comprend bien évidement qu'une direction radiale est une direction perpendiculaire à cet axe commun. La direction azimutale (ou circonférentielle) correspond à la direction décrivant un anneau autour de la direction axiale. Les trois directions axiale, radiale et azimutale correspondent respectivement aux directions définies par la côte, le rayon et l'angle dans un système de coordonnées cylindrique. De plus, sauf précision contraire, les adjectifs « intérieur » et « extérieur » sont utilisés en référence à une direction radiale de sorte qu'un élément intérieure (i.e. radialement intérieure) est plus proche de l'axe qu'un élément extérieure (i.e. radialement extérieure).

On comprend que les deux parois annulaires délimitent une zone annulaire dans laquelle on dépose une couche de poudre à l'aide du distributeur de poudre. Le racleur s'étend entre les parois interne et externe de manière à racler et évacuer l'excèdent de poudre de manière à uniformiser l'épaisseur de la couche de poudre. Ainsi, on comprend que le racleur s'étend au moins depuis une paroi annulaire jusqu'à l'autre paroi annulaire. Par exemple, le racleur s'étend au-delà d'une paroi par rapport à la zone annulaire, voire au-delà des deux parois annulaires par rapport à la zone annulaire.

On comprend également que le distributeur de poudre est rotatif autour de l'axe commun des parois annulaire (i.e. autour de la direction axiale), c'est-à-dire qu'il est mobile en translation selon la direction azimutale. Par ailleurs, le racleur forme un angle avec la direction radiale. On comprend donc que le racleur n'est pas perpendiculaire à la direction azimutale.

Grâce à l'angle formé par le racleur par rapport à la direction radiale, le surplus de poudre est évacué latéralement, par exemple vers l'extérieur. Ceci permet de répartir ou « d'étaler » la poudre de manière uniforme sur la zone annulaire, et de chasser le surplus de poudre, vers le côté intérieur ou vers le côté extérieur de la zone annulaire. Ainsi, lorsque le racleur repasse là où il est déjà passé, on s'assure qu'il n'y a plus de surplus de poudre de sorte que la couche de poudre n'est pas altérée par ce deuxième passage. Par conséquent, le « raccord de poudre » entre le début et la fin de course azimutale du distributeur est homogène avec le reste de la couche de poudre annulaire qui présente ainsi une épaisseur uniforme sur toute son étendue.

Le distributeur de poudre comprend un orifice de distribution de poudre s'étendant entre la paroi annulaire interne et la paroi annulaire externe.

On comprend donc que l'orifice de distribution de poudre (ci-après l'« orifice ») couvre la zone annulaire depuis la paroi interne jusqu'à la paroi externe. Ceci permet de déposer la poudre de manière sensiblement uniforme selon la direction radiale sur toute la longueur azimutale de la zone annulaire, grâce à quoi on améliore l'uniformité de l'épaisseur de la couche de poudre telle que déposée par l'orifice de distribution.

On comprend qu'il y a une couche de poudre « initiale » qui résulte du dépôt de poudre par l'orifice de distribution de poudre et une couche de poudre « finale » qui résulte du passage du racleur sur la couche de poudre initiale. Bien entendu, au plus l'épaisseur de la couche initiale est uniforme, au plus l'épaisseur de la couche finale sera également uniforme.

L'orifice de distribution de poudre forme un angle avec la direction radiale des parois.

Ceci permet d'orienter un front de dépôt de poudre en formant un angle par rapport à la direction radiale, ce qui facilite l'évacuation du surplus de poudre par le racleur. Par exemple, l'angle entre l'orifice et la direction radiale est orienté de la même manière que l'angle du racleur par rapport à la direction radiale. Par exemple, l'angle formé par l'orifice avec la direction radiale est le même que l'angle formé par le racleur avec la direction radiale. Pour ce faire, par exemple, le racleur est monté sur une paroi délimitant l'orifice.

Dans certains modes de réalisation, l'angle entre le racleur et la direction radiale des parois est strictement supérieur à 0° (zéro degré d'angle) et inférieur ou égal à 30° (trente degré d'angle).

En d'autres termes, l'angle formé par le racleur avec la direction radiale n'est pas nul (i.e. strictement positif) et au maximum égal à 30°. Ainsi, l'angle α formé entre le racleur et la direction radiale, vérifie la relation : 0° < α ≤ 30°

Un tel angle permet de faciliter l'évacuation latérale du surplus de poudre, grâce à quoi on comble des éventuels creux formés par des manques locaux de poudre.

Dans certains modes de réalisation, le racleur comprend au moins deux lames, à savoir une lame d'ébauche et une lame de finition.

Par exemple, considérées dans le sens de déplacement du distributeur, la lame d'ébauche est disposée avant la lame de finition. Ainsi, la lame d'ébauche passe sur la couche de poudre en premier, et ensuite la lame de finition. Par exemple, l'extrémité distale de la lame d'ébauche selon la direction axiale est de 0.01 mm à 0.04 mm en retrait par rapport à l'extrémité distale de la lame de finition selon la direction axiale. Par exemple, la lame d'ébauche et la lame de finition sont parallèles. Par exemple, la lame d'ébauche et la lame de finition présentent des rigidités en flexion différentes, par exemple la lame d'ébauche étant moins rigide que la lame de finition.

La lame d'ébauche permet d'évacuer le surplus de poudre tandis que le racleur de finition permet de finaliser l'état de surface de la couche de poudre en nivelant parfaitement la surface de la couche de poudre et évacuant le surplus de poudre résiduel. Un tel racleur à deux lames permet d'optimiser l'évacuation du surplus de poudre et l'uniformité de l'épaisseur de la couche de poudre.

Dans certains modes de réalisation, l'angle entre l'orifice de distribution de poudre et la direction radiale des parois est strictement supérieur à 0° et inférieur ou égal à 30°.

Dans certains modes de réalisation, la section de l'orifice de distribution de poudre est croissante selon la direction radiale.

On comprend donc qu'au plus on s'éloigne de l'axe, au plus la section de l'orifice de distribution est important. Ceci permet d'ajuster la quantité de poudre déposée par l'orifice en fonction du rayon au sein de la zone annulaire. Par exemple, la section de l'orifice est telle que la quantité de poudre distribuée par unité de surface soit la même quelle que soit la position radiale considérée. Ainsi, la quantité de poudre par unité de surface distribuée est la même du côté intérieur et du côté extérieur de la zone annulaire. Ceci permet d'améliorer l'uniformité de l'épaisseur de la couche de poudre.

Dans certains modes de réalisation, l'ouverture de l'orifice de distribution de poudre est commandée de sorte que l'orifice de distribution de poudre peut être ouvert, fermé, ou bien en position intermédiaire entre la position d'ouverture et de fermeture. Ceci permet un parfait ajustement du débit de poudre notamment en fonction du besoin volumique local et/ou de la vitesse d'étalement.

Dans certains modes de réalisation, le distributeur de poudre comprend un réservoir de poudre.

Un tel réservoir de poudre intégré au distributeur permet d'assurer une alimentation continue et constante en poudre, grâce à quoi l'homogénéité du dépôt de poudre est améliorée.

Dans certains modes de réalisation, le dispositif comprend une gouttière interne et une gouttière externe de récupération de poudre disposées à l'extérieur de la zone annulaire de dépôt de poudre, la gouttière interne étant disposée au voisinage de l'extrémité distale de la paroi annulaire interne tandis que la gouttière externe est disposée au voisinage de l'extrémité distale de la paroi annulaire externe.

Par « voisinage de l'extrémité distale » on entend que la gouttière est au même niveau axial que l'extrémité distale de la paroi considérée, ou au-dessous en étant adjacente à la paroi considérée. Les gouttières peuvent être disposées jusqu'à 10 mm au-dessous des extrémités distales des parois annulaires. Par exemple, en fonctionnement, le racleur est en contact selon la direction axiale avec l'extrémité distale de la paroi interne et de la paroi externe, évacuant ainsi la poudre directement dans les gouttières. De telles gouttières, facilitent la récupération et le recyclage du surplus de poudre ainsi évacué. Ceci permet également de maitriser la récupération du surplus de poudre, et d'éviter que tout ou partie de ce surplus ne se retrouve par inadvertance sur la couche et détériore son homogénéité et l'uniformité de son épaisseur.

Dans certains modes de réalisation, le dispositif comprend un système d'aspiration et de recyclage de poudre configuré pour aspirer la poudre récupérée dans les gouttières interne et externe et la conduire vers un réservoir de poudre.

Le réservoir de poudre peut bien entendu être un réservoir annexe ou bien un réservoir principal d'alimentation de poudre, ce réservoir principal alimentant en poudre le réservoir du distributeur. Ceci permet de recycler la poudre, et de la réutiliser dans les étapes suivantes. Le dispositif est donc plus économique et gagne en autonomie.

Ceci permet également de récupérer de manière automatisée le surplus de poudre évacué, ce qui minimise les interventions manuelles et par voie de conséquence les risques de mauvaise manipulation pouvant conduire à une détérioration de la couche de poudre. On améliore ainsi indirectement l'homogénéité et l'uniformité de l'épaisseur de la couche de poudre.

### BREVE DESCRIPTION DES DESSINS

L'invention et ses avantages seront mieux compris à la lecture de la description détaillée faite ci-après de différents modes de réalisation de l'invention donnés à titre d'exemples non limitatifs. Cette description fait référence aux pages de figures annexées, sur lesquelles :
- la figure 1 représente un dispositif de fabrication de pièces annulaires par fusion sélective de poudre, vu de dessus,
- la figure 2 représente le dispositif de la figure 1, vu selon le plan de coupe II de la figure 1,
- la figure 3 représente le distributeur de poudre vu selon le plan de coupe III de la figure 2, et
- la figure 4 représente le distributeur de poudre vu selon la flèche IV de la figure 3.

### DESCRIPTION DETAILLEE D'EXEMPLES DE REALISATION

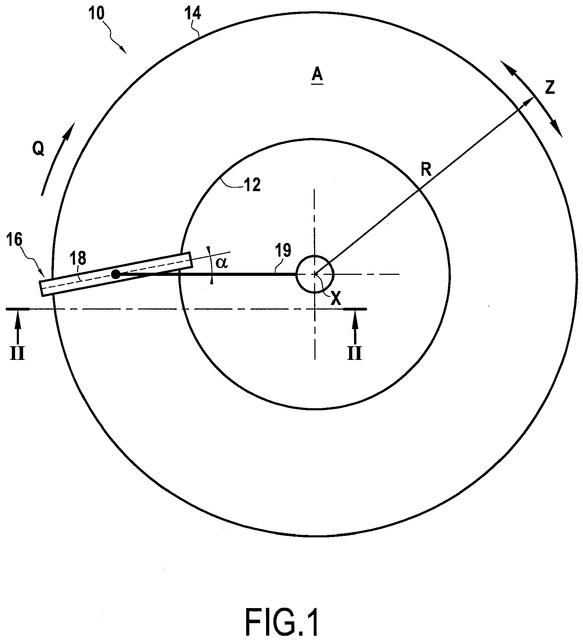

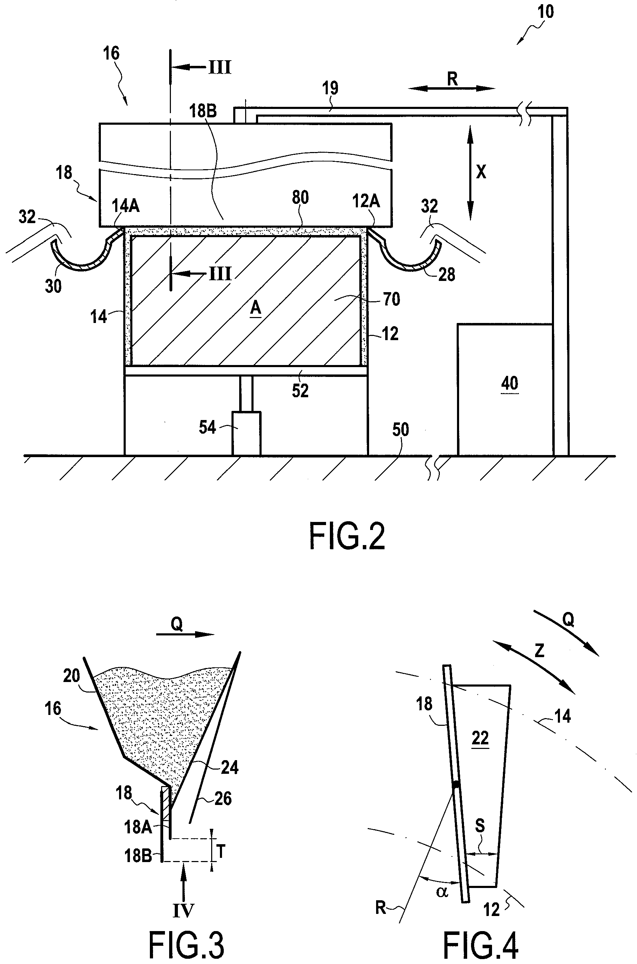

Les figures 1 et 2 représentent un dispositif 10 de fabrication de pièces annulaire par fusion sélective de poudre. Bien entendu, et ce de manière générale, la poudre est une poudre métallique qui est frittée par une ou plusieurs têtes laser ou par faisceau(x) d'électrons. On alterne ainsi un dépôt d'une couche de poudre, puis le frittage sélectif de cette couche de poudre par une tête laser/faisceau d'électrons. Ceci est connu par ailleurs par l'homme du métier, et n'est donc pas décrit dans le présent exposé.

Le dispositif 10 comprend une paroi annulaire interne 12 et une paroi annulaire externe 14 délimitant une zone annulaire A de dépôt de poudre. Les parois 12 et 14 sont concentriques et présentent un axe commun X définissant une direction axiale X. Les directions radiale et azimutales sont respectivement représentées par les flèches R et Z. Comme cela est représenté sur la figure 2, les parois 12 et 14 sont montées fixes par rapport à une embase 50, un plateau 52 monté sur un support coulissant 54 selon la direction axiale X et formant un fond est disposé dans la zone annulaire A. Ainsi, au début des opérations, le plateau 52 est positionné légèrement en retrait des extrémités distales 12A et 14A des parois 12 et 14, une première couche de poudre est déposée puis frittée. Ensuite le support 54 est déplacé vers le bas sur la figure 2, de sorte que le plateau 52 s'éloigne des extrémités 12A et 14A des parois 12 et 14, grâce à quoi un nouvel espace pour recevoir une nouvelle couche de poudre est créé. Ensuite, une nouvelle couche de poudre est déposée, puis frittée, et le plateau de nouveau descendu, etc. Sur la figure 2, une étape intermédiaire est représentée, une pièce 70 étant en cours de fabrication, une couche de poudre 80 étant déposée. On note que de la poudre résiduelle (i.e. non frittée) est prisonnière entre la pièce 70 en cours de fabrication et les parois 12 et 14. Pour la clarté de l'exposé, la pièce 70 est dans cet exemple un cylindre annulaire, mais bien entendu toutes autres formes, et notamment des formes complexes, sont envisageables, comme par exemple une roue à aubes ou un redresseur de flux.

Un distributeur de poudre 16 est mobile en rotation autour de l'axe X, dans cet exemple en étant monté à l'extrémité d'un bras 19. Comme cela est visible sur la figure 3, le distributeur 16 comprend un racleur 18 et un réservoir de poudre 20.

Sur la figure 1, le racleur 18 est représenté en trait discontinu. L'angle α entre le racleur 18 et la direction radiale R (le bras 16 s'étendant selon la direction radiale) est égale à 10° (dix degré d'angle).

En référence à la figure 3, dans cet exemple, le racleur 18 comprend deux lames parallèles, à savoir une lame d'ébauche 18A et une lame de finition 18B. L'extrémité distale de la lame d'ébauche 18A est en retrait par rapport à l'extrémité distale de la lame de finition 18B. Dans cet exemple, le retrait T est égal à 0.02 mm. De manière générale, le retrait T est compris entre 0.01 mm et 0.04 mm.

Le réservoir de poudre 20 est muni d'un orifice 22 de distribution de poudre. Cet orifice 22 est représenté sur la figure 4 et s'étend entre la paroi interne 12 et la paroi externe 14, depuis la paroi interne 12 jusqu'à la paroi externe 14. En d'autres termes, dans cet exemple, l'orifice 22 présente une première extrémité radiale disposée sensiblement en vis-à-vis, selon la direction axiale X, de la paroi interne 12 et une deuxième extrémité radiale disposée sensiblement en vis-à-vis, selon la direction axiale X, de la paroi externe 14. La section S de l'orifice 22 est croissante selon la direction radiale R. En effet, dans cet exemple, la forme de l'orifice est trapézoïdale, le petit côté du trapèze étant disposé du côté intérieur tandis que le grand côté est disposé du côté extérieur.

Le racleur 18 est monté sur une paroi du réservoir 20 de sorte que le l'orifice 22 forme le même angle α avec la direction radiale que le racleur 18. On note qu'au sens de la présente invention l'angle entre le racleur 18 et l'orifice 22 est mesuré entre la lame d'ébauche 18A (si le racleur a plusieurs lames), et la paroi délimitant l'orifice 22 qui est adjacente au racleur 18.

Sur la figure 3, l'orifice 22 est fermé par une lame de fermeture 24, cette lame 24 venant en position d'ouverture en appui sur la lame d'ajustement d'ouverture 26. Ainsi, la lame de fermeture 24 est mobile entre une position de fermeture représentée sur la figure 3 et une position d'ouverture correspondant sensiblement à la position de la lame 26.

En référence à la figure 2, le dispositif 10 est équipé d'une gouttière interne 28 et une gouttière externe 30, ces gouttières étant disposées à l'extérieur de la zone annulaire A, et raccordées aux extrémités distales 12A et 14A des parois 12 et 14. Ces gouttières 28 et 30 ne sont pas représentées sur la figure 1, mais s'étendent bien évidement sur toute la périphérie interne de la paroi interne 12 et sur toute la périphérie externe de la paroi externe 14. Des buses d'aspiration 32 formant un système d'aspiration et de recyclage sont disposées en regard du fond des gouttières 28 et 30. Ces buses sont configurées pour aspirer la poudre évacuée par le racleur 18 depuis la zone annulaire A. La poudre ainsi aspirée est conduite vers un réservoir principal de poudre 40 pour être réutilisée par la suite. Dans cet exemple, les buses 32 sont solidaires du bras 19 (couplage non représenté) et sont entrainées en rotation avec le bras 19. Selon une variante, les gouttières sont également solidaires du bras 19 et entrainées en rotation avec le bras. Dans ce cas, bien entendu, les gouttières ne s'étendent pas sur toute la longueur azimutale des parois 12 et 14.

En fonctionnement, comme représenté sur la figure 2, le racleur 18, et plus particulièrement la lame de finition 18B est en contact selon la direction axiale X avec les extrémités distales 12A et 14A des parois 12 et 14. Le distributeur 16 étant entrainé selon la direction azimutale Z dans le sens Q représenté sur les figures 1, 3 et 4, le racleur 18 évacue le surplus de poudre qui est évacué vers les gouttières 28 et 30 puis aspirée et conduite vers le réservoir 40. Par exemple il y a une aspiration continue par les buses 32 lors du passage du racleur 18 sur la couche de poudre, grâce à quoi la poudre est aspirée dès qu'elle est évacuée vers les gouttières, ce qui permet d'éviter au maximum la présence de poudre indésirable au voisinage de la zone annulaire A.

Par ailleurs, comme cela est représenté sur la figure 4, l'orifice de distribution de poudre s'étend légèrement au-delà des parois interne et externe 12 et 14. Les gouttières 28 et 30 permettent également de récupérer et recycler ce surplus de poudre déposé à l'extérieur de la zone annulaire au moment de la distribution de poudre.

Bien évidemment, le racleur 18 étant fixé au réservoir 20, la poudre est évacuée par le racleur 18 en même temps que le dépôt de poudre est effectué. Toutefois, l'orifice 22 pouvant être fermé, on peut poursuivre la course du racleur 18, tandis que l'orifice 22 est fermé, au-delà du premier tour, par exemple sur un quart de tour, pour assurer une parfaite évacuation du surplus de poudre.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

Il est également évident que toutes les caractéristiques décrites en référence à un procédé sont transposables, seules ou en combinaison, à un dispositif, et inversement, toutes les caractéristiques décrites en référence à un dispositif sont transposables, seules ou en combinaison, à un procédé.

## Revendications

1. Dispositif (10) de fabrication de pièces annulaires par fusion sélective de poudre, comprenant une paroi annulaire interne (12) et une paroi annulaire externe (14) concentriques et délimitant une zone annulaire (A) de dépôt de poudre, un distributeur de poudre (16) mobile en rotation autour de l'axe (X) des parois annulaires interne et externe (12, 14), dans lequel le distributeur de poudre (16) comprend un racleur (18) s'étendant entre la paroi annulaire interne (12) et la paroi annulaire externe (14), le racleur (18) formant un angle (α) strictement supérieur à 0° avec la direction radiale (R) des parois annulaires interne et externe (12, 14), et dans lequel le distributeur de poudre (16) comprend un orifice de distribution de poudre (22) s'étendant entre la paroi annulaire interne (12) et la paroi annulaire externe (14), l'orifice de distribution de poudre (22) formant un angle (α) avec la direction radiale (R) des parois annulaires interne et externe (12, 14).

2. Dispositif (10) selon la revendication 1, dans lequel l'angle (α) entre le racleur (18) et la direction radiale (R) des parois (12, 14) est strictement supérieur à 0° et inférieur ou égal à 30°.

3. Dispositif (10) selon la revendication 1 ou 2, dans lequel le racleur (18) comprend au moins deux lames, à savoir une lame d'ébauche (18A) et une lame de finition (18B).

4. Dispositif (10) selon l'une quelconque des revendications 1 à 3, dans lequel l'angle (α) entre l'orifice de distribution de poudre (22) et la direction radiale (R) des parois (12, 14) est strictement supérieur à 0° et inférieur ou égal à 30°.

5. Dispositif (10) selon l'une quelconque des revendications 1 à 4, dans lequel la section (S) de l'orifice de distribution de poudre (22) est croissante selon la direction radiale (R).

6. Dispositif (10) selon l'une quelconque des revendications 1 à 5, dans lequel le distributeur de poudre (16) comprend un réservoir de poudre (20).

7. Dispositif (10) selon l'une quelconque des revendications 1 à 6, comprenant une gouttière interne (28) et une gouttière externe (30) de récupération de poudre disposées à l'extérieur de la zone annulaire (A) de dépôt de poudre, la gouttière interne (28) étant disposée au voisinage de l'extrémité distale (12A) de la paroi annulaire interne (12) tandis que la gouttière externe (30) est disposée au voisinage de l'extrémité distale (14A) de la paroi annulaire externe (14).

8. Dispositif (10) selon la revendication 7, comprenant un système d'aspiration et de recyclage de poudre (32) configuré pour aspirer la poudre récupérée dans les gouttières interne et externe (28, 30) et la conduire vers un réservoir de poudre (40).

## Patentansprüche

1. Vorrichtung (10) zur Herstellung von ringförmigen Teilen durch selektives Pulverschmelzen, die eine ringförmige Innenwand (12) und eine ringförmige Außenwand (14), die konzentrisch sind und eine ringförmige Pulverauftragszone (A) abgrenzen, und einen um die Achse (X) der ringförmigen Innen- und Außenwand (12, 14) drehbeweglichen Pulverspender (16) umfasst, wobei der Pulverspender (16) einen Abstreifer (18) umfasst, der sich zwischen der ringförmigen Innenwand (12) und der ringförmigen Außenwand (14) erstreckt, wobei der Abstreifer (18) mit der radialen Richtung (R) der ringförmigen Innen- und Außenwand (12, 14) einen Winkel (α) bildet, der strikt größer als 0° ist, und wobei der Pulverspender (16) eine Pulverabgabeöffnung (22) umfasst, die sich zwischen der ringförmigen Innenwand (12) und der ringförmigen Außenwand (14) erstreckt, wobei die Pulverabgabeöffnung (22) einen Winkel (α) mit der radialen Richtung (R) der ringförmigen Innen- und Außenwand (12, 14) bildet.

2. Vorrichtung (10) nach Anspruch 1, wobei der Winkel (α) zwischen dem Abstreifer (18) und der radialen Richtung (R) der Wände (12, 14) strikt größer als 0° und kleiner oder gleich 30° ist.

3. Vorrichtung (10) nach Anspruch 1 oder 2, wobei der Abstreifer (18) mindestens zwei Blätter, nämlich ein Rohblatt (18A) und ein Feinbearbeitungsblatt (18B), umfasst.

4. Vorrichtung (10) nach einem der Ansprüche 1 bis 3, wobei der Winkel (α) zwischen der Pulverabgabeöffnung (22) und der radialen Richtung (R) der Wände (12, 14) strikt größer als 0 und kleiner oder gleich 30° ist.

5. Vorrichtung (10) nach einem der Ansprüche 1 bis 4, wobei der Querschnitt (S) der Pulverabgabeöffnung (22) entlang der radialen Richtung (R) zunehmend ist.

6. Vorrichtung (10) nach einem der Ansprüche 1 bis 5, wobei der Pulverspender (16) einen Pulverbehälter (20) umfasst.

7. Vorrichtung (10) nach einem der Ansprüche 1 bis 6, die eine Innenrinne (28) und eine Außenrinne (30) zur Rückgewinnung von Pulver umfasst, die außerhalb der ringförmigen Pulverauftragszone (A) angeordnet sind, wobei die Innenrinne (28) in der Nachbarschaft des distalen Endes (12A) der ringförmigen Innenwand (12) angeordnet ist, während die Außenrinne (30) in der Nachbarschaft des distalen Endes (14A) der ringförmigen Außenwand (14) angeordnet ist.

8. Vorrichtung (10) nach Anspruch 7, die ein System zum Ansaugen und Rückführen von Pulver (32) umfasst, das dazu ausgestaltet ist, das in der Innen- und Außenrinne (28, 30) rückgewonnene Pulver anzusaugen und es hin zu einem Pulverbehälter (40) zu führen.

## Claims

1. A device (10) for fabricating annular pieces by selectively melting powder, comprising an inner annular wall (12) and an outer annular wall (14) that are concentric and that define an annular powder deposition zone (A), a powder dispenser (16) movable in rotation about the axis (X) of the inner and outer annular walls (12, 14), wherein the powder dispenser (16) comprises a wiper (18) extending between the inner annular wall (12) and the outer annular wall (14), the wiper (18) forming an angle (α) strictly greater than 0° with the radial direction (R) of the inner and outer annular walls (12, 14), and wherein the powder dispenser (16) comprises a powder dispenser orifice (22) extending between the inner annular wall (12) and the outer annular wall (14), the powder dispenser orifice (22) forming an angle (α) with the radial direction (R) of the walls (12, 24).

2. A device (10) according to claim 1, wherein the angle (α) between the wiper (18) and the radial direction (R) of the walls (12, 14) is strictly greater than 0° and less than or equal to 30°.

3. A device (10) according to claim 1 or claim 2, wherein the wiper (18) comprises at least two blades, namely a roughing blade (18A) and a finishing blade (18B).

4. A device (10) according to any one of claims 1 to 3, wherein the angle (α) between the powder dispenser orifice (22) and the radial direction (R) of the walls (12, 14) is strictly greater than 0° and less than or equal to 30°.

5. A device (10) according to any one of claims 1 to 4, wherein the section (S) of the powder dispenser orifice (22) increases in the radial direction (R).

6. A device (10) according to any one of claims 1 to 5, wherein the powder dispenser (16) includes a powder tank (20) .

7. A device (10) according to any one of claims 1 to 6, comprising an inner gutter (28) and an outer gutter (30) for recovering powder, which gutters are arranged outside the annular powder deposition zone (A), the inner gutter (28) being arranged in the neighborhood of the distal end (12A) of the inner annular wall (12), while the outer gutter (30) is arranged in the neighborhood of the distal end (14A) of the outer annular wall (14).

8. A device (10) according to claim 7, including a powder suction and recycling system (32) configured to suck up the powder recovered in the inner and outer gutters (28, 30) and to convey it to a powder tank (40).
